Europäisches Patentamt

European Patent Office

Office européen des brevets

(19)

(11) Veröffentlichungsnummer : **0 025 204**
**B1**

(12) # EUROPÄISCHE PATENTSCHRIFT

(45) Veröffentlichungstag der Patentschrift :
29.02.84

(51) Int. Cl.³ : **F 16 L 55/16, F 16 L 55/18**

(21) Anmeldenummer : **80105217.6**

(22) Anmeldetag : **02.09.80**

(54) **Verfahren und Vorrichtung zum Abdichten einer undichten Stelle in einer nichtbegehbaren Rohrleitung.**

(30) Priorität : **07.09.79 CH 8104/79**

(43) Veröffentlichungstag der Anmeldung :
**18.03.81 Patentblatt 81/11**

(45) Bekanntmachung des Hinweises auf die Patenterteilung : **29.02.84 Patentblatt 84/09**

(84) Benannte Vertragsstaaten :
**FR IT**

(56) Entgegenhaltungen :
**DE-A- 2 513 770**
**US-A- 2 894 539**

(73) Patentinhaber : **Kunststoff-Technik AG Himmler**
**Leimbachstrasse 38 / Frymannstrasse 15**
**CH-8041 Zürich (CH)**

(72) Erfinder : **Himmler, Erich**
**Im Dorf**
**CH-8835 Feusisberg (CH)**

(74) Vertreter : **Siebert, Rolf, dipl.Masch.Ing.ETH**
**Promenadengasse 18**
**CH-8001 Zürich (CH)**

EP 0 025 204 B1

Verfahren und Vorrichtung zum Abdichten einer undichten Stelle in einer nichtbegehbaren Rohrleitung

Die Erfindung betrifft ein Verfahren zum Abdichten einer undichten Stelle, insbesondere einer Muffenverbindung, in einer nichtgebehbaren, unterirdisch verlegten Rohrleitung sowie eine Vorrichtung zur Durchführung des Verfahrens.

Während das Abdichten begehbarer Rohrleitungen im allgemeinen keine besonderen Probleme bildet, da solche Leitungen regelmässig inspiziert und allfällig auftretende Schäden sofort behoben werden können, bereitet das Abdichten nichtbegehbarer Leitungen grössere Probleme. Dabei gehört der grösste Teil der verlegten Rohrleitungen zu der letzteren Gattung ; der Durchmesser variiert beispielsweise für Abwasserleitungen zwischen 30-60 cm. Die Abdichtung von solchen Rohrleitungen, insbesondere von Abwasserleitungen, ist von einiger Bedeutung ; es ist nicht so sehr die Gefahr der Verunreinigung des Grundwassers durch das durch die Leitung fliessende Abwasser als vielmehr das Eindringen von Niederschlagswasser (sogenanntes Meteorwasser) in die Rohrleitungen, sodass die hindurchfliessende Menge bedeutend zunimmt und damit beispielsweise eine Kläranlage am Ende der Rohrleitung überfüllen kann. Dieses eindringende Meteorwasser steht meist unter einem wesentlich höheren statischen Druck als das durch die Rohrleitung fliessende Abwasser.

Nach einem bekanntgewordenen Verfahren wird eine nichtbegehbare Rohrleitung dadurch repariert, dass an einer zugänglichen Stelle eine Einrichtung in die Rohrleitung eingeführt wird, welche in der Lage ist, die defekte Stelle ferngesteuert auszubessern (US-A-2 894 539). Hierbei wird zuerst diese Stelle lokalisiert, dann das mitgeführte Dichtungsmittel aufgespritzt und mittels rotierender Lappen am Rohrumfang verstrichen, wobei es aushärtet. Dieses Verfahren weist gewisse Nachteile auf. Erstens wird die genannte Stelle durch magnetische Induktion lokalisiert, sodass nur Metallrohre repariert werden können. Hauptsächlich aber liegt der Nachteil darin, dass die Dichtungsmasse nur an der Innenseite der Rohrleitung aufgebracht wird. Der im Erdreich vorhandene, oft recht hohe statische Wasserdruck ist aber dann in der Lage, das aufgetragene Material mit der Zeit wieder abzusprengen, sodass die Leckstelle nach einiger Zeit praktisch wieder unverändert vorhanden ist.

Statt der schon erwähnten induktiven Aufspürung der Leckstelle war es auch bereits bekannt, eine Fernsehkamera auf einem Wagen durch die Rohrleitung zu schicken. Man konnte dann wenigstens Stelle genau lokalisieren. Meistens wurde dann aber die Rohrleitung durch Ausgraben freigelegt, hierauf repariert oder ersetzt, neu verlegt und dann wieder zugdeckt. Versuche, den Rohrabschnitt mit der defekten Stelle mittels aufblasbarer Elemente axial abzudichten und dann durch eines der Elemente hindurch eine das Dichtungsmaterial enthaltende Leitung einzuführen, deren Auslassende gegen die defekte Stelle hin abgewinkelt ist, scheiterten bei ihrer Anwendung auf Abwasserleitung ebenfalls. Hier liegt der Grund darin, dass solche Leitungen in einem Ausmass korrodiert sind, das eine einwandfreie Abdichtung gar nicht mehr zulässt. Tiefe Krater und über längere Distanzen sich erstreckende poröse Stellen, die sich nach einiger Zeit infolge der aggressiven Substanzen in den Abwässern bilden, sind ein typisches Erscheinungsbild. Auch bei relativ hohen Drücken, auf welchen die genannten Elemente aufgepumpt werden, dringt daher ein beachtlicher Teil des eingespritzten Dichtungsmaterials durch die genannten Krater und porösen Stellen an den Elementen vorbei, womit die Abdichtung der schadhaften Stelle illusorisch wird. Im übrigen weist auch dieses Verfahren denselben Nachteil wie das vorhin erwähnte Verfahren auf, indem das Dichtungsmaterial nur auf die Innenseite der Rohrleitung aufgebracht wird.

Es wurde daher schon versucht, diesen Nachteil zu vermeiden, und ein entsprechendes Verfahren ist ebenfalls schon bekanntgeworden (DE-A-20 41 478). Hierbei wird in den Abschnitt der Rohrleitung, in welchem sich die schadhafte Stelle befindet, ein Gas eingebracht, das flüchtige metallische und flüchtige organische Verbindungen enthält. Das Gas soll durch die Leckstelle entweichen, wobei die genannten Verbindungen mit vorhandenem Sauerstoff sowie mit Feuchtigkeit an der Aussenseite der Rohrleitung reagieren und ein festes, die Leckstelle verschliessendes Produkt bilden sollen. Dieses Verfahren eignet sich besonders für metallische Rohrleitungen ; für Abwasserleitungen, die meist aus Zement oder Beton bestehen, haben jedoch Versuche die Unbrauchbarkeit dieses Verfahrens bestätigt. Der Grund dürfte hauptsächlich in der starken Verschmutzung der Leckstelle liegen, die eine Ablagerung des genannten festen Produktes praktisch verhindert. Ausserdem benötigt das Verfahren eine extrem lange Zeit, was für solche Leitungen völlig unzumutbar ist.

Das erfindungsgemässe Verfahren vermeidet nun alle diese Nachteile und eignet sich daher vor allem auch für die Abdichtung von durchgehenden Ringspalten. Diese sind namentlich an den Uebergangsstellen zweier angrenzender Rohre, also an den sogenannten Muffenverbindungen vorhanden, da diese keine Dichtungen aufweisen. Die bisher bekannten Verfahren zum Abdichten solcher Muffenverbindungen, bei denen die Zwischenräume entlang des Umfanges der Rohrleitung von wenigen Zehntels- bis zu einigen Millimetern variieren können, sind nur auf begehbare Rohrleitungen anwendbar.

Dieses genannte Verfahren ist erfindungsgemäss durch die Merkmale des Anspruches 1 gekennzeichnet.

Zur Durchführung des Verfahrens dient eine Vorrichtung, die sich erfindungsgemäss durch die Merkmale des Anspruches 6 auszeichnet.

Die Erfindung wird anhand der beiliegenden Zeichnungen beispielsweise näher erläutert, es zeigen :

Figur 1 schematisch einen Querschnitt durch eine Rohrleitung mit der darin befindlichen Vorrichtung beim Beginn des Verfahrens,

Figur 2 eine Phase in der Durchführung des Verfahrens,

Figur 3 einen Längsschnitt durch die Rohrleitung, mit der Vorrichtung in derselben und mit ihrer Steuerzentrale oberhalb des zur Rohrleitung führenden Schachtes,

Figur 4 eine Längsansicht, teilweise im Schnitt, des Geräteteils der Vorrichtung, und

Figur 5 eine stark vereinfachte Stirnansicht dieses Geräteteils, zwecks Darstellung des Mittels zur begrenzten Verdrehbarkeit der Hohlwelle.

Figur 6 eine Stirnansicht einer Einrichtung zum Spachteln der Rohrleitung, und

Figur 7 einen Längsschnitt durch diese entlang der Linie VII-VII in Fig. 6.

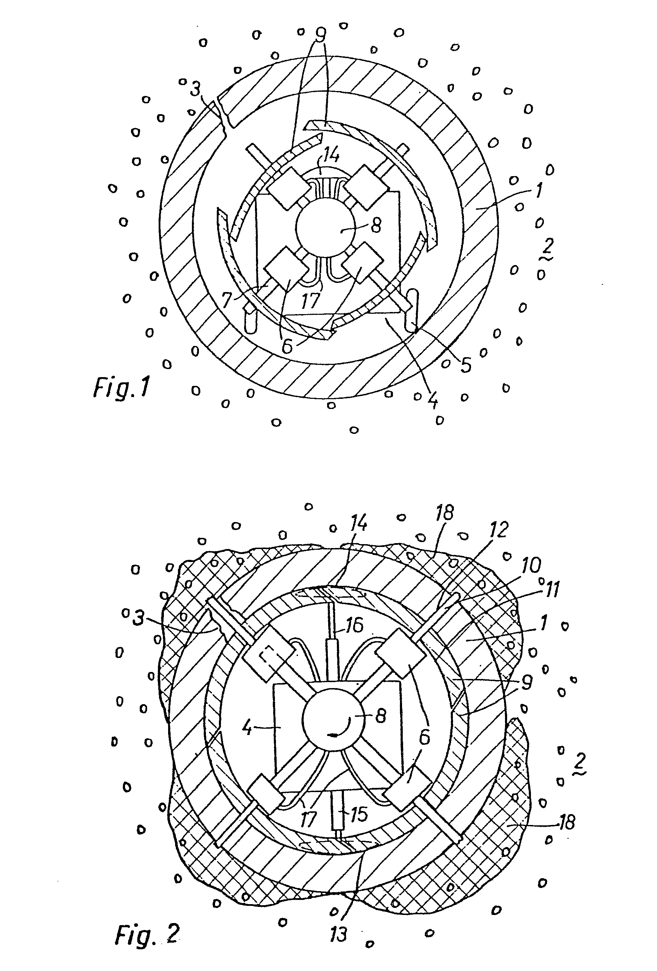

Figur 1 zeigt eine Rohrleitung 1, die im Boden oder Erdreich 2 verläuft, und in welcher stark vereinfacht die Vorrichtung zur Abdichtung der Rohrleitung 1 dargestellt ist ; hier sind nur diejenigen Teile dargestellt, die zum unmittelbaren Verständnis des nun zu erläuternden Verfahrens vorerst notwendig sind.

Die Rohrleitung 1 weist an irgendeiner Stelle eine oder mehrere undichte Stellen auf, von denen eine stark vergrössert dargestellt und mit 3 bezeichnet ist, und die nun durch das erfindungsgemäss Verfahren abgedichtet werden sollen. Zu diesem Zweck wird die Vorrichtung, die einen Wagen 4 auf Pneurädern 5 umfasst, bis zur betreffenden Stelle entlang der Rohrleitung 1 gefahren. Die Vorrichtung enthält ferner vier Bohrköpfe 6, die in ebenfalls noch darzustellender Weise an radial abstehenden Führungsstangen 7 geführt sind. Die Stangen sind auf einer Hohlwelle 8 montiert. Jedem Bohrkopf 6 ist ferner ein bogenförmiges Abdichtschild 9 zugeordnet, das mit dem Bohrkopf radial verschiebbar ist. Ist die schadhafte Stelle bzw. sind diese Stellen erreicht (meistens liegen sie wie erwähnt im Bereich einer Muffenverbindung und somit praktisch in einer Ebene senkrecht zur Rohrleitungsachse, also in der Zeichnungsebene), werden die Bohrköpfe radial ausgefahren. Die Bohrer 10 bohren nun durch die Rohrleitungswand 11 hindurch je ein radiales Loch 12, bis sie ins Erdreich 2 hineinstossen und zwar entweder an den schadhaften Stellen oder wenigstens in deren Nähe. Wenn die Löcher gebohrt sind, haben auch die Abdichtungsschilde 9 die Rohrleitungswand 11 erreicht und legen sich an deren Innenseite so an, dass sie einen geschlossenen Dichtungsring bilden, wie dies aus Figur 2 zu erkennen ist. Um den Bohrvorgang stabil durchführen zu können, sind je eine obere und eine untere Andrückplatte 13, 14 vorgesehen, die durch entsprechende Hydraulikzylinder 15, 16 ausfahrbar sind, bis sie sich dank ihrer gekrümmten Oberfläche an die Rohrleitungswand 11 anlegen und so die Vorrichtung unverrückbar festhalten.

Sind die Löcher durch die Wand 11 hindurchgebohrt, werden die Bohrer 10 stillgelegt. Da sie hohl sind, kann nun ein über Leitungen 17 herangeführtes Dichtungsmittel durch sie hindurch in das Erdreich 2 gepresst werden. Das Dichtungsmittel dringt in das Erdreich ein und breitet sich um jedes Bohrloch herum nach allen Richtungen aus. Es ist vorzugsweise so beschaffen, dass es nach kurzer Zeit erstarrt, gegebenenfalls unter Verbindung mit dem Erdreich. Besonders geeignet für diesen Zweck ist ein Kunststoff-Gel. Das erstarrte Dichtungsmittel bildet um jedes Bohrloch herum eine pilzförmige Abdichtung 18. Die schadhaften Stellen sind damit abgedichtet.

Man erkennt nun auch den Werf der Abdichtschilde 9. Wären diese nicht vorhanden, würde der grösste Teil des Dichtungsmittels wegen des hohen Druckes durch das Bohrloch zurücklaufen und im Rohrinnern verspritzen.

Nun lässt sich allerding nicht feststellen, ob diese « Abdichtungspilze » 18 sich derart ausgebreitet haben, dass sie einen zusammenhängenden Dichtungsmantel rings um den gesamten Rohrumfang herum bilden. Wenn dies nämlich nicht der Fall ist, wie in Figur 1 dargestellt, so besteht namentlich an den Verbindungstellen der Rohre, die Gefahr, dass das im Erdreich vorhandene Meteorwasser die Abdichtungen 18 an ihren Rändern zu unterwandern beginnt, sodass es schliesslich doch bis zur schadhaften Stelle vordringen kann. Deshalb wird aus Sicherheitsgründen nochmals eine Anzahl Löcher gebohrt, die zwischen die bereits gebohrten zu liegen kommen ; sie sind in Fig. 2 nicht dargestellt. Zu diesem Zweck werden die Bohrer 10 aus den ersten Löchern zurückgezogen und hierauf in einer Ebene vertikal zur Rohrleitungsachse, also in der Zeichnungsebene, um einen begrenzten Winkelbereich durch Rotieren der Hohlwelle 8 verschwenkt. Der Winkelbereich beträgt hier zweckmässigerweise 45°. Nunmehr können die weiteren Löcher gebohrt werden, durch die dann in derselben Weise Dichtungsmittel gepresst wird. Die neu sich bildenden Abdichtpilze wachsen dann mit den bereits bestehenden zu einem Ring zusammen, der eine vollständige Abdichtung gewährleistet.

Man ersieht daraus, dass der grosse Vorteil dieses Verfahrens vor allem darin besteht, dass das Abdichtungsmittel nicht an der Innenseite des schadhaften Rohres angebracht wird, sondern an dessen Aussenseite. Dadurch wird es vom Wasser, das es fernhalten soll, gegen das Rohr gepresst ; bei den bisherigen Dichtungsverfahren musste es mit dem Rohr sehr gut verbunden sein, um nicht durch den Druck von diesem abgelöst zu werden.

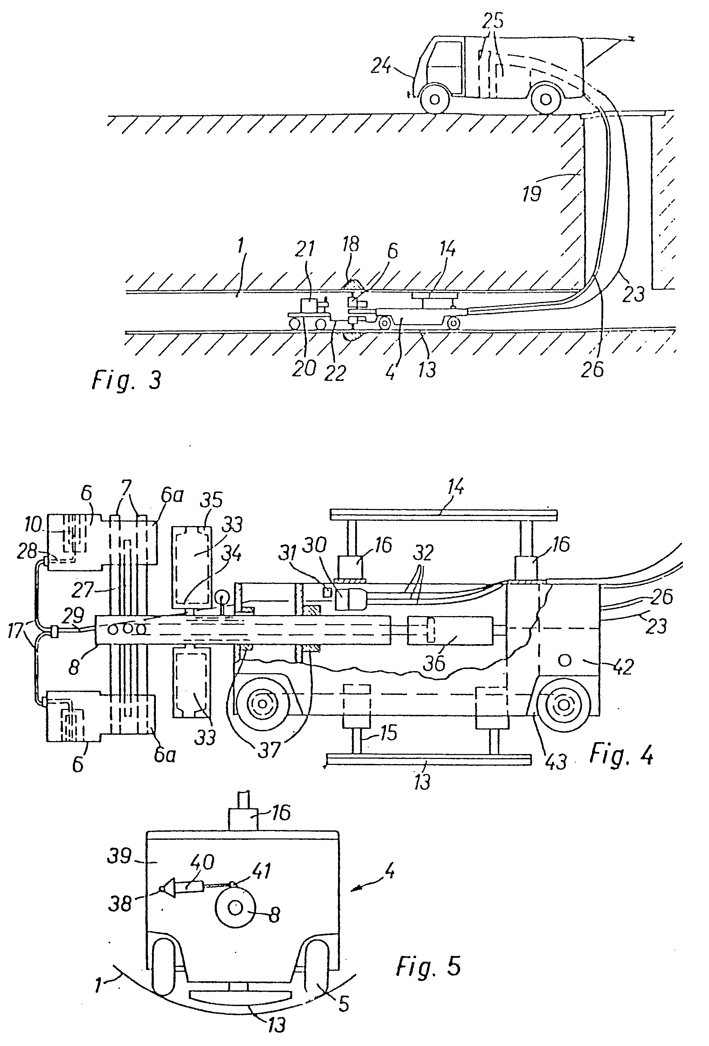

Fig. 3 zeigt nun den Einsatz der Vorrichtung. Die Rohrleitung 1 ist im Längsschnitt dargestellt und weist an einer Stelle einen zur Oberfläche des Erdreiches 2 führenden Kontrollschacht 19 auf. Durch diesen kann die gesamte Vorrichtung hinunter gebracht werden. Zuerst wird ein kleiner Wagen 20 hinuntergelassen, der eine Fernsehkamera 21 und eine nicht dargestellte Lichtquelle trägt. Anschliessend daran folgt der Geräteteil der Vorrichtung mit dem schon erwähnten Wagen 4 und den Bohrköpfen 6. Die beiden Wagen 20 und 4 werden nun durch eine Kupplung 22 miteinander verbunden.

Weil die Rohrleitung 1 wegen ihres geringen Durchmessers nicht begehbar ist, muss das gesamte Abdichtungsverfahren, also das Hinfahren an die schadhaften Stellen, das Bohren und das Einspritzen des Dichtungsmaterials ferngesteuert erfolgen. Wegen der Feuchtigkeit (die Abdichtung kann unter Umständen sogar dann vorgenommen werden, wenn noch etwas Wasser durch die Rohrleitung hindurch fliesst) werden hydraulische Antriebe bevorzugt ; einzig für die Beleuchtung und die Fernsehkamera wird ein elektrisches Kabel 23 benötigt. Die Fernsteuerung erfolgt vom Fahrzeug 24 aus, welches die Vorrichtung an Ort und Stelle gebracht hat ; dieses enthält in seinem Inneren einen Fernsehmonitor, eine hydraulische Druckerzeugungsgruppe und ein Steuerpult. Diese Anlagen sind gesamthaft mit 25 bezeichnet und durch Schläuche 26 mit der Vorrichtung in der Rohrleitung 1 verbunden. Die Schläuche müssen natürlich genügend lang sein, um einen Betrieb über ein längeres Rohrstück zu ermöglichen. Zweckmässig ist es, lediglich zwei Schläuche vorzusehen und auf dem Geräteteil die entsprechenden Ventile vorzusehen, durch welche das Hydraulikmittel nach Bedarf zum einen oder anderen Aggregat geleitet wird, da diese nie miteinander gleichzeitig in Betrieb sind.

Die in die Rohrleitung 1 abgesenkten Wagen 20 und 4 werden in Bewegung gesetzt, und die Beleuchtung sowie die Fernsehkamera werden eingeschaltet. Wird auf dem Monitor eine schadhafte Stelle entdeckt, wird die Vorrichtung so angehalten, dass die Bohrköpfe 6 sich genau auf der Höhe dieser Stelle befinden. Hierauf spielen sich die schon erwähnten Vorgänge ab.

Anhand der Fig. 4 soll nun der Geräteteil der Vorrichtung noch im einzelnen beschrieben werden. Man erkennt links die Bohrköpfe 6, von denen der Uebersicht halber nur zwei eingezeichnet sind, die Führungsstangen 7 und die Hohlwelle 8, auf welcher diese Stangen sitzen. Die Bohrköpfe 6 mit den Bohrern 10 weisen je einen seitlich angebrachten Führungskörper 6a auf, der die beiden parallel nebeneinander liegenden Führungsstangen 7 umgreift. Das dazwischenliegende Rohr 27 dient dazu, das Steuermedium in diese Führungskörper zu bringen, um diese in bekannter Weise entlang der Führungsstangen 7 radial zu verschieben.

Am rückwärtigen Ende jedes Bohrers 10, dessen Antrieb nicht näher dargestellt ist, befindet sich im Bohrkopf 6 ein Kanal 28. An der Stirnseite des Bohrkopfes 6 ist an diesen Kanal eine der schon erwähnten Leitungen 17 angeschlossen, die von einer gemeinsamen Leitung 29 zu den einzelnen Bohrköpfen führen. Die Leitung 29 ist an einen Mischkopf 30 auf dem Wagen 4 angeschlossen. In diesem Mischkopf wird das Dichtungsmittel aus drei Komponenten, nämlich aus Wasser und zwei Kunstharzen, laufend hergestellt. Ueber einen Verteiler 31 gelangt das fertig vermischte Dichtungsmittel dann in die Leitung 29. Die genannten Komponenten werden dem Mischkopf 30 über separate Schlauchleitungen 32 vom Fahrzeug 24 aus zugeführt. Ein Vorbereiten der Mischung ist wegen ihrer raschen Aushärtezeit nicht möglich.

Hinter den Bohrköpfen 6 folgt eine gleiche Anzahl von Mörtelpressen 33. Sie enthalten lediglich Zementmörtel, mit welchen die gebohrten Löcher 12 wieder verschlossen werden. An und für sich wäre dieses Verschliessen nicht notwendig, denn die Abdichtung 18 wirkt auch, ohne dass die Bohrlöcher wieder verschlossen werden müssen. Das Ausfüllen der Bohrlöcher kann jedoch als zusätzliche Sicherheitsmassnahme betrachtet werden. Jede Mörtelpresse 33 ist im wesentlichen ein zylindrischer Behälter, der ebenfalls wie die Bohrköpfe radial verschiebbar ist, um dichtend gegen das betreffende Bohrloch angelegt zu werden. In seinem Innern weist der Behälter einen Kolben 34 auf, der nach erfolgtem Anlegen den Inhalt, also den Zementmörtel, in das Borhloch hineindrückt, worauf die Mörtelpresse radial wieder zurückfährt. Um ein einwandfreies Einpressen zu gewährleisten, ist jede Mörtelpresse an ihrem freien Ende, also an demjenigen, das sich gegen das Bohrloch anlegt, mit einer geeigneten ringförmigen Dichtung 35 versehen.

Wie schon erwähnt, ist der Wagen 4 während des Bohrens der Löcher durch die Andrückplatten 13, 14 blockiert. Damit nun zum Ausfüllen der Bohrlöcher durch die Mörtelpressen 33 die Blockierung nicht gelöst werden muss, ist die Hohlwelle 8 längsverschiebbar. Dadurch können die axial hinter den Bohrern angeordneten Mörtelpressen vorgeschoben und auf die Löcher zentriert werden. Die Hohlwelle weist zu diesem Zweck eine Vorschubeinrichtung 36 auf, bestehend aus einem ferngesteuerten hydraulischen Zylinderkolbenaggregat, und ist in Axiallagern gelagert.

Im Gegensatz zum Kunstharzdichtungsmittel ist Zementmörtel während einer längeren Zeit beständig. Er wird daher vor dem Einsatz der Vorrichtung in die Mörtelpressen 33 abgefüllt, sodass besondere Zuleitungen zu diesen nicht notwendig sind.

Bei der Beschreibung des Bohrvorganges wurde bereits erwähnt, dass die Hohlwelle 8 verdrehbar sein muss. Hiefür dient eine Einrichtung, die in ihrer einfachsten Ausführung aus Fig. 5 ersichtlich ist und die axial hinter den Mörtelpressen 33 angeordnet ist (Fig. 4). Sie weist ein um einen Fixpunkt 38 der Vorderwand 39 des Wagens 4 angebrachtes Zylinderkolbenaggregat 40 auf, das an einem Gelenk 41 am Umfang der Hohlwelle 8 angreift. Für den beschränkten Verstellbereichgenügt diese Einrichtung vollauf.

Damit die Vorrichtung überhaupt in der Rohrleitung 1 bewegbar ist, muss sie einen Antrieb für die Räder 5 aufweisen. Hiefür dient zweckmässigerweise ein Hydraulikmotor 42, der in bekannter Weise auf die darunterliegenden Räder einwirkt. Mit Vorteil werden von dort aus über eine Kette 43 oder sonst ein Uebertragungsorgan auch die anderen Räder angetrieben, was dann zweckmässig ist, wenn die Rohrleitung 1 eine Steigung aufweist, also nicht horizontal verläuft wie dargestellt.

Da die ganze Vorrichtung für Rohrleitungen vorgesehen ist, die wegen ihres geringen Durchmessers nicht begehbar sind, muss sie eine sehr niedrige Bauhöhe aufweisen, ist dafür aber auch entsprechend leicht zu handhaben. Da solche Rohrleitungen meist einen genormten Durchmesser aufweisen, ist die Vorrichtung über einen grossen Teil des Rohrleitungsnetzes verwendbar. Für Rohrleitungen mit anderem Durchmesser müssen die Abdichtschilde 9, die Andrückplatten 13, 14 und allenfalls auch noch die Mörtelpressen 33 ausgewechselt werden, um sie dem veränderten Krümmungsradius anzupassen.

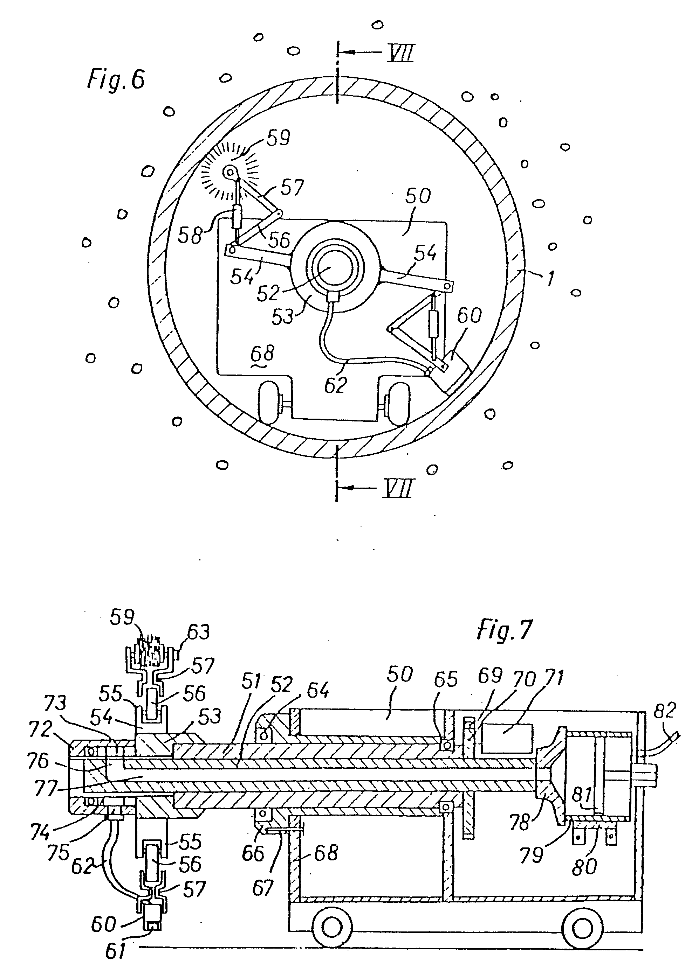

Oft kann es auch wünschenswert oder sogar vorgeschrieben sein, die reparierte Stelle nachträglich noch mit einem Spachtelüberzug zu versehen. Dieses Verspachteln kann auch anstelle des erwähnten Verstopfens der Bohrlöcher mit Mörtel treten. Hierfür dient eine Einrichtung, die in den Figuren 6 und 7 näher dargestellt ist. Sie könnte auf demselben Wagen 4 wie die Bohrvorrichtung montiert sein; vorteilhafter ist jedoch die Montage auf einem separaten Fahrzeug, damit der die Bohrvorrichtung tragende Wagen nicht zu lang wird und dadurch nicht mehr in die Rohrleitung eingebracht werden kann.

Figur 6 zeigt einen solchen Wagen 50 von der Stirnseite her gesehen, der äusserlich gleich wie der Wagen 4 aufgebaut ist. Aehnlich wie jener trägt er eine drehbare Welle 51, die als Hohlwelle ausgebildet ist, hier aber konzentrisch eine stationäre Welle 52 umgreift. Auf einer mit der drehbaren Welle 51 verbundenen Nabe 53 sind zwei Arme 54 vorgesehen, die an ihren Enden gabelförmig ausgeführt sind. Diese Gabeln 55 nehmen je einen ersten Schwenkarm 56 auf, der mit einem zweiten Schwenkarm 57 gelenkig sowie über ein Zylinderkolbenaggregat 58 verbunden ist. Dieses dient zum Spreizen des aus den beiden Schwenkarmen 56, 57 gebildeten Gelenkes. Am Ende des einen der beiden Gelenke ist eine Drahtbürste 59, am anderen ein schwenkbar gelagerter Behälter 60 mit einer Auslassöffnung 61 (Fig. 7) angebracht. Dieser Behälter dient zur Abgabe von Spachtelmaterial an die Wand der Rohrleitung, wobei ihm das Material über einen Schlauch 62 zugeführt wird. Die Steuerung der Zylinderkolbenaggregate 58, welche über flexible, hier nicht dargestellte Leitungen erfolgen kann, bewirkt ein Anliegen sowohl der Drahtbürste 59 als auch des Behälters 60 bzw. seiner Auslassöffnung 61 an die Wand der Rohrleitung 1. Das durch den Schlauch 62 in den Behälter 60 geförderte Spachtelmaterial wird während des Verschwenkens der Arme 54 und der Gelenke 56, 57 am Umfang der Innenwand der Rohrleitung verteilt und von der Drahtbürste 59 glattgerieben. Zu diesem Zweck ist die Drahtbürste entweder starr, also nicht drehbar montiert oder weist einen besonderen, nicht dargestellten Antrieb auf, damit sie beim erwähnten Verschwenken nicht einfach in der Rohrleitung abrollt. Im ersten Fall wird zwar nur ein Teil der Drahtbürste verwendet und hierbei abgenützt; die Bürste wird dann aber mittels einer Schraube oder Flügelmutter 63 (Fig. 7) nach beendigter Arbeit gelöst und um einen bestimmten Winkel verdreht, sodass für den nächsten Einsatz ein neuer, nicht abgenützter Umfangsteil der Bürste an der Rohrleitung anliegt.

Die Lagerung der drehbaren Welle 51 und die Zuführung des Spachtelmaterials durch die stationäre Welle 52 zum Behälter 60 werden nun anhand der Fig. 7 erläutert. Die Welle 51 dreht sich in zwei Lagern 64, 65, die in einer stationären Hülse 66 befestigt sind. Diese Hülse ist mittels eines Bolzens 67 an der vorderen Stirnwand 68 des Wagens fixiert. An ihrem hinteren Ende ist die drehbare Welle 51 mit einem grossen Zahnrad 69 verbunden, das von einem wesentlich kleineren Zahnrad 70 auf der Welle eines Antriebs 71 in Bewegung versetzt wird. Am andern Ende trägt die Welle 51 die schon erwähnte Nabe 53, die also mitdreht. Ebenfalls drehbar ist eine um die Nabe anschliessende Büchse 72. Sie weist einen Ringraum 73 auf, der mit Ringdichtungen 74 versehen ist. An einer Stelle entlang seines Umfanges weist der Ringraum einen Auslass 75 auf. An diesem ist der Schlauch 62 angeschlossen. Dadurch, dass die Büchse 72 sich mit der Nabe 53 und somit auch mit dem Behälter 60 dreht, wird der Schlauch 62 bei der Drehung nicht aufgewickelt.

Das Spachtelmaterial tritt in den sich drehenden Ringraum 73 durch ein abgewinkeltes Ende 76 einer axialen Bohrung 77 in der stationären Welle 52 ein. Die Bohrung 77 schliesst an einen Trichter 78 an, der das eine Ende eines Zylinders 79 abschliesst, welcher auf einem Support 80 montiert ist. Ein Kolben 81 bewegt sich unter der Wirkung eines in den Zylinder einströmenden Mediums, das über eine Leitung 82 Steuerpult 25 im Wagen 24 (Fig. 3) gesteuert wird. Der Kolben 81 bewegt sich in Fig. 7 nach links und drückt dabei das Spachtelmaterial durch die aus den Abschnitten 77, 76, 73 und 62 bestehende Leitung in den Behälter 60. Der Zylinder 79 wird jeweils vor Beginn des Einsatzes des Wagens 50 gefüllt, also noch bevor dieser in die Rohrleitung 1 eingebracht wird.

Am linken Ende der stationären Welle 51 kann ein nichtdargestellter Support angebracht sein, der eine Fernsehkamera und die notwendige Beleuchtung trägt. Möglich wäre aber auch eine Kupplung ähnlich der Kupplung 22 (Fig. 3), sodass der Wagen 20 dem Wagen 50 vorangesetzt werden kann.

Das dargestellte Verfahren und die Vorrichtung ermöglichen eine bedeutende Einsparung in der Ausbesserung solcher Rohrleitungen. Es wurde errechnet, dass diese Einsparungen 50-60 % gegenüber denjenigen Kosten ausmachen, die durch das bisherige Ausgraben der Rohrleitung, deren Reparatur oder Ersatz, das Zuschütten des Grabens und die Neuasphaltierung der Strasse oder des Platzes entstehen.

## Ansprüche

1. Verfahren zum Abdichten einer undichten Stelle (3), insbesondere einer Muffenverbindung, in einer nichtbegehbaren, unterirdisch verlegten Rohrleitung (1), mittels eines in das Innere derselben eingebrachten flüssigen Dichtungsmittels, das auf die Aussenseite dieser Rohrleitung in das diese umgebende Erdreich (2) gelangt und dort um die undichte Stelle (3) herum eine Abdichtung (18) bildet, dadurch gekennzeichnet, dass die undichte Stelle gesucht und lokalisiert wird, dass in die Rohrleitung (1) vom Rohrinnern her ein Loch (12) durch die Rohrwand (11) hindurch entweder an der schadhaften Stelle (3) selber oder mindestens in deren Nähe gebohrt wird, und dass das Dichtungsmittel unter Druck durch dieses Bohrloch hindurch geleitet wird, um in das die Rohrleitung (1) umgebende Erdreich (2) eingespritzt zu werden.

2. Verfahren nach Anspruch 1, dadurch gekennzeichnet, dass auf der Höhe der schadhaften Stelle mehrere Löcher in gleichen Umfangsabständen voneinander gebohrt werden.

3. Verfahren nach Anspruch 2, dadurch gekennzeichnet, dass zuerst eine erste Anzahl von Löchern und hierauf eine zweite Anzahl gebohrt wird, wobei diese letzteren Löcher zwischen die ersten zu liegen kommen.

4. Verfahren nach Anspruch 1 oder 2, dadurch gekennzeichnet, dass nach dem Eingeben des Dichtungsmaterials das Bohrloch bzw. die Bohrlöcher wieder verschlossen wird bzw. werden.

5. Vorrichtung zur Durchführung des Verfahrens nach Anspruch 1, mit einem Wagen (4) sowie Mitteln (13, 14) zu seiner Blockierung während des Arbeitsablaufs, gekennzeichnet durch eine zum Auffinden und Lokalisieren der schadhaften Stelle (3) in die Rohrleitung (1) verschiebbar einführbare Fernsehkamera, durch wenigsten einen auf einem Wagen (4) angebrachten, quer zur Bewegungsrichtung des Wagens beweglichen Bohrer (10), durch Mittel (30, 31) zur Herstellung des Dichtungsmittels auf dem Wagen und durch Mittel (17, 28, 29) zum Eingeben des Dichtungsmittels in das gebohrte Loch (12).

6. Vorrichtung nach Anspruch 5, mit mehreren radial voneinander abstehenden Bohrern (10), in der jeder Bohrer (10) auf einem Bohrkopf (6) angebracht ist, der seitlich auf zwei radial von einer Hohlwelle (8) aus abstehenden Stangen (7) geführt ist, und in der alle Bohrköpfe durch in der Hohlwelle herangeführtes Druckmedium radial verschiebbar sind.

7. Vorrichtung nach Anspruch 6, dadurch gekennzeichnet, dass die Hohlwelle (8) mit den Bohrköpfen (6) durch ein erstes Mittel (36) axial verschiebbar und durch ein zweites Mittel (40) in einem begrenzten Winkelbereich rotierbar ist.

8. Vorrichtung nach Anspruch 5, dadurch gekennzeichnet, dass der Bohrer hohl ist und mit seinem rückwärtigen Ende an einen im Bohrkopf (6) angeordneten Kanal (28) angeschlossen ist.

9. Vorrichtung nach den Ansprüchen 5 und 8, dadurch gekennzeichnet, dass die Mittel zur Herstellung des Dichtungsmittels aus einem Mischkopf (30) und einem Verteiler (31) bestehen, von denen aus wenigstens eine Leitung (29, 17) zum Kanal (28) im Bohrkopf (6) führt, um das Dichtungsmittel von dort aus in das Bohrloch einzugeben.

10. Vorrichtung nach Anspruch 5, dadurch gekennzeichnet, dass um den Bohrer (10) herum ein zum Anlegen an die Rohrleitungswand (11) bestimmtes, mit dem Bohrer verschiebbares Abdichtschild (9) angeordnet ist.

11. Vorrichtung nach den Ansprüchen 6 und 10, dadurch gekennzeichnet, dass jeder Bohrer ein Abdichtschild (9) aufweist, wobei alle Abdichtschilde so angeordnet sind, dass sie bei Anlage an die Rohrleitungswand (11) einen geschlossenen Ring bilden.

12. Vorrichtung nach Anspruch 5, gekennzeichnet durch wenigstens einen Behälter (33) zur Aufnahme von Material zum Verschliessen des Bohrloches (12) nach erfolgter Eingabe des Dichtungsmittels, welcher auf der Hohlwelle angeordnet und radial verschiebbar ist und an seinem radial äussern Ende eine Dichtung (35) zum Anlegen an die Rohrleitungswand und in seinem Innern einen Kolben (34) zum Ausstossen des Materials aus dem Behälter in das Bohrloch hinein aufweist.

## Claims

1. Method for sealing a leaking point, particularly of a sleeve point in a pipeline laid underground and through which it is not possible to walk, by means of a liquid sealing medium introduced into the interior of said pipeline (1), said sealing means reaching the outside of said pipeline, penetrating into the soil (2) which surrounds it and forming there a seal (18) around the leaking point (3), characterized in that the leaking point is searched for and located, that a hole (12) is drilled from the pipeline interior through the pipeline wall either at the leaking point (3) itself or at least in its vicinity, and that the sealing medium is conducted under pressure through said drill hole in order to be injected into the soil (2) surrounding the pipeline (1).

2. Method according to Claim 1, characterized in that a plurality of holes, having equal circumferential spacings from each other, are drilled level with the damaged point.

3. Method according to Claim 2, characterized in that initially a first number of holes is drilled and then a second number of holes, the latter holes being arranged between the former ones.

4. Method according to Claim 1 or 2, that after introducing the sealing medium the drill hole or drill holes is or are sealed again.

5. Apparatus for performing the method according to Claim 1, comprising a trolley (4) and means (13, 14) for stopping it during performing the work, characterized by a television camera (21) that can be introduced into and displaced along the pipeline for discovering and locating the damaged point (3), by at least one drill (10) placed on the trolley (4) and movable at right angles to the direction of movement of the trolley (4), by means (30, 31) for producing the sealing medium on the trolley and by means (17, 28, 29) for introducing the sealing medium into the drilled hole (12).

6. Apparatus according to Claim 5, comprising several drills radially diverging from each other, wherein each drill (10) is mounted on a drill head (6) which is laterally guided on two rods (7) radially projecting from a hollow shaft and wherein all drill heads are radially displaceable by a pressure medium brought along in the hollow shaft.

7. Apparatus according to Claim 6, characterized in that the hollow shaft (8) with the drill heads (6) is axially displaceable by a first means (36) and is rotatable in a limited angular range by a second means (40).

8. Apparatus according to Claim 5, characterized in that the drill is hollow and is connected by its rear end to a channel (28) arranged in the drill head (6).

9. Apparatus according to Claims 5 and 8, characterized in that the means for producing the sealing medium consist of a mixing head (30) and a spreader (31) from where at least one conduit (29, 17) leads to the channel (28) in the drill head (6) in order to feed the sealing medium into the drill hole.

10. Apparatus according to Claim 5, characterized in that a sealing plate (9) displaceable with the drill (10) is arranged around said drill, said sealing plate being intended to lie against the pipeline wall (11).

11. Apparatus according to Claims 6 and 10, characterized in that each drill has a sealing plate (9), all sealing plates being arranged in such a way that, upon contacting the pipeling wall (11), they form a closed ring.

12. Apparatus according to Claim 5, characterized by at least one container (33) for receiving material for sealing the drill hole (12) after having introduced the sealing medium, said container being positioned on the hollow shaft and radially displaceable whilst having on its radially outer end a seal (35) for lying against the pipeline wall (11) and in its interior a piston (34) for discharging the material out of the container and into the drill hole.

## Revendications

1. Procédé pour étancher une fuite (3), notamment d'un joint à manchon, dans une conduite (1) souterraine, non-accessible, à l'aide d'un produit liquide d'étanchement, introduit à l'intérieur de ladite conduite (1), lequel produit d'étanchement parvient du côté extérieur de cette conduite, dans le sol (2) qui l'entoure, et y forme un étanchement (18) autour de la fuite (3), caractérisé par le fait que la fuite est recherchée et localisée, qu'un trou (12) est foré dans la conduite (1), à partir de l'intérieur de celle-ci, à travers sa paroi (11), soit au niveau de la fuite (3) elle-même, soit au moins à proximité, et que le produit d'étanchement est envoyé sous pression à travers ce trou, pour être injecté dans le sol (2), qui entoure la conduite (1).

2. Procédé selon la revendication 1, caractérisé par le fait que plusieurs trous, espacés régulièrement sur le pourtour, sont forés au niveau de la fuite.

3. Procédé selon la revendication 2, caractérisé par le fait que l'on fore tout d'abord un premier nombre de trous, puis un second nombre de trous, ces derniers trous étant disposés entre les premiers.

4. Procédé selon la revendication 1 ou 2, caractérisé par le fait que, après l'introduction du produit d'étanchement, le ou les trous est ou sont à nouveau obturés.

5. Dispositif pour mettre en œuvre le procédé selon la revendication 1, comportant un chariot (4), ainsi que des moyens (14) pour le bloquer pendant le déroulement du travail, caractérisé par une caméra (21), qui peut être introduite et déplacée dans la conduite pour découvrir et localiser la fuite (3), par au moins un foret (10), monté sur un chariot (4) et mobile transversalement à la direction du déplacement du chariot, par des moyens (30, 31) pour préparer le produit d'étanchement sur le chariot, et par des moyens (17, 28, 29) pour introduire le produit d'étanchement dans le trou foré (12).

6. Dispositif selon la revendication 5, qui comporte plusieurs forets (10), écartés radialement les uns des autres, dans lequel chaque foret (10) est monté sur une tête de forage (6), qui est guidée latéralement sur deux barres (7), se détachant radialement d'un arbre creux (8), et dans lequel toutes les têtes de forage peuvent être déplacées radialement par un fluide sous pression, amené dans l'arbre creux.

7. Dispositif selon la revendication 6, caractérisé par le fait que l'arbre creux (8), avec les têtes de forage (6), peut être déplacé axialement par un premier moyen (36), et être tourné par un second moyen (40), dans une plage angulaire limitée.

8. Dispositif selon la revendication 5, caractérisé par le fait que le foret est creux et qu'il est raccordé par son extrémité arrière à un canal (28) aménagé dans la tête de forage (6).

9. Dispositif selon les revendications 5 et 8, caractérisé par le fait que les moyens pour préparer le produit d'étanchement sont constitués par une tête mélangeuse (30) et un dispositif (31), à partir duquel au moins une conduite (29, 17) aboutit au canal (28) de la tête de forage (6), pour introduire le produit d'étanchement, qui en provient, dans le trou foré.

10. Dispositif selon la revendication 5, caractérisé par le fait que, autour du foret (10), est disposé un bouclier d'étanchement (9), qui est mobile avec le foret, et qui est destiné à s'appliquer contre la paroi (11) de la conduite.

11. Dispositif selon les revendications 6 et 10, caractérisé par le fait que chaque foret comporte un bouclier d'étanchement (9), tous les boucliers d'étanchement étant disposés de façon à former un anneau fermé lorsqu'ils sont appliqués contre la paroi (11) de la conduite.

12. Dispositif selon la revendication 5, caractérisé par au moins un réservoir (33) pour recevoir la matière destinée à l'obturation du trou foré (12) après introduction du produit d'étanchement, ce réservoir étant disposé sur l'arbre creux, étant mobile radialement, et présentant, à son extrémité externe dans la direction radiale, un élément d'étanchéité (35) à appliquer contre la paroi de la conduite, et, à l'intérieur dudit réservoir, un piston (34), pour expulser la matière hors du réservoir en la faisant pénétrer dans le trou foré.

Fig.1

Fig. 2

Fig. 3

Fig. 4

Fig. 5

Fig.6

Fig.7